# EUROPÄISCHE PATENTSCHRIFT

(11) **EP 2 525 962 B1**
(45) Veröffentlichungstag und Bekanntmachung des Hinweises auf die Patenterteilung: **15.04.2015**
(21) Anmeldenummer: 10794883.8
(22) Anmeldetag: 09.12.2010
(51) Int. Cl.: B32B 37/06, B29C 70/22, B32B 38/16, B32B 37/04, B29C 70/02, B29C 70/46, B29C 70/86, B32B 3/12, B32B 37/14, B60N 2/68, B32B 38/18, B29K 101/12, B29L 31/60

(54) **SANDWICHBAUTEIL UND VERFAHREN ZU DESSEN HERSTELLUNG**
SANDWICH COMPONENT AND METHOD FOR THE PRODUCTION THEREOF
PIECE SANDWICH ET PROCEDE POUR SA FABRICATION

(30) Priorität: 22.01.2010 DE 102010005456
(43) Veröffentlichungstag der Anmeldung: 28.11.2012
(73) Patentinhaber: Daimler AG, 70327 Stuttgart (DE)
(72) Erfinder: STAMP, Benno, 70619 Stuttgart (DE); IWAN, Sebastian, 09113 Chemnitz (DE); BIEDER, Hubert, 73770 Denkendorf (DE); GREINER, Raph, 71229 Leonberg (DE); ZUCKER, Tino, 09456 Mildenau (DE); NENDEL, Wolfgang, 09569 Oederan (DE)
(74) Vertreter: JENSEN & SON
(86) Internationale Anmeldenummer: PCT/EP2010/007511
(87) Internationale Veröffentlichungsnummer: WO 2011/088871

(56) Entgegenhaltungen:
- EP-A1- 0 894 611
- EP-B1- 1 626 852
- DE-A1- 10 214 024
- DE-A1- 10 255 039
- DE-A1-102004 015 472
- US-A- 4 496 024
- US-A- 4 902 365
- US-A1- 2002 086 912
- US-B1- 6 551 441

## Beschreibung

Die Erfindung betrifft die Herstellung eines Sandwichbauteils mit einer ebenen oder mit einer um einen Radius gekrümmten Form, das einen auf Zellulose basierten Wabenkern und zumindest eine Deckschicht umfasst.

Im Zuge der Leichtbaustragtegie vor allem auch im Kraftfahrzeugbau zur Senkung sowohl der Kraftstoffkosten als auch der Kohlendioxidemissionen kommen zunehmend Bauteile in Sandwichaufbau zum Einsatz, die ein deutlich verringertes Gewicht gegenüber herkömmlichen Bauteilen aufgrund der geringen Dichte des Materials, das den Kern bildet, und ausreichende Festigkeitswerte durch eine geeignete Deckschichtmaterialauswahl bieten können. Aus dem Bereich der Luft- und Raumfahrt sind hochbelastbare Sandwichbauteile bekannt, deren Wabenkern meist aus hochwertigem, aber auch teurem phenolharzgetränktem Aramidpapier besteht. Die Deckschichten werden dabei aus Verstärkungsfasern in duroplastischer Matrix gebildet. Die Herstellung eines solchen Sandwichbauteils erfolgt vor allem nach dem Autoklav-Verfahren oder durch Handlaminieren. Diese Herstellungsverfahren lassen nur kleine Stückzahlen zu, sind sehr kostenintensiv und daher für die Fertigung von Kraftfahrzeugbauteilen in Großserie ungeeignet. Auch tragen die verwendeten hochwertigen Materialien zu hohen Kosten bei.

Aus dem Stand der Technik ist mit der DE 10 2007 007 554 A1 ein biegesteifes, flächiges Verbundbauteil eines Fahrzeugs und ein Herstellungsverfahren für dasselbe bekannt, das als Schiebehimmel, Hutablage oder Ladeboden eingesetzt werden kann. Jenes Verbundbauteil besteht aus einer zwischen zwei Deckschichten - jeweils einer Faser verstärkten Polyurethanschicht - angeordneten Kernschicht, die eine Wabenstruktur haben kann, und in die ein profiliertes Verstärkungselement eingebettet ist. Zur Herstellung des Verbundbauteils wird zunächst das Verstärkungselement in dafür vorgesehene Ausnehmungen in der Kernschicht eingelegt, diese zwischen zwei Faserschichten angeordnet, die jeweils mit dem Polyurethan besprüht werden, woran sich ein Verpressen des Sandwichs in einem Presswerkzeug zur Formung und Aushärtung des Verbundbauteils anschließt.

Ferner beschreibt die WO 2004/080698 A1 ein Verfahren zur Herstellung einer Langfaser verstärkten thermoplastischen Verbundstruktur unter Verwendung eines Hybrid- oder Mischgarns aus Verstärkungsfaser und Thermoplastfaser, die einer beheizten gelappten Düse zugeführt werden, in der eine intensive Imprägnierung der Verstärkungsfaser mit dem thermoplastischen Material stattfindet. Das thermoplastische Fasermaterial umfasst dabei Polyethylen, Polyethylenterephthalat, Polybutylenterephthalat, Nylon, thermoplastische Polyurethane, Polyacetal, Polyphenylensulfid, Cycloolefincopolymere, thermotrope Polyester und Mischungen davon.

Aus der DE 102 55 039 A1 ist ein Verfahren zur Herstellung eines Verbundstoffformteiles bekannt, umfassend die Schritte: a) Heißpressen einer Faserverbundmatte aus Naturfasern und thermoplastischen Fasern bei einer Temperatur oberhalb der Plastifizierungstemperatur der thermoplastischen Fasern und Erhalten einer Naturfaser/Thermoplast-Verbundwerkstoffschicht, b) Verpressen der noch heißen Naturfaser/Thermoplast-Verbundwerkstoffschichten mit mindestens einer Schicht zur Bildung der hohlraumbildenden Kernlage des Verbundstoffformteiles, wobei diese zwischen mindestens zwei heißgepressten Naturfaser/Thermoplast-Verbundwerkstoffschichten angeordnet ist

Aus der DE 10214024 A1, US 6551441 B1, und EP 0894611 A1 sind unterschiedliche Sandwichbauteile bekannt, bei denen die Kanten eine Versiegelung aufweisen.

Ausgehend von diesem Stand der Technik ist es wünschenswert, ein Sandwichbauteil aus kostengünstigen Materialien mit verbesserten mechanischen Eigenschaften und/oder verbesserter Oberflächengüte in einfacher Weise herzustellen. Insbesondere besteht die Aufgabe in der Schaffung von Verfahren, mit denen das Sandwichbauteil mit wenigen Prozessschritten in hohen Stückzahlen und kurzen Zykluszeiten hergestellt werden kann.

Diese Aufgabe wird durch ein Herstellungsverfahren für ein Sandwichbauteil mit den Merkmalen des Anspruchs 1 oder 2 gelöst.

Eine erste Ausführungsform bezieht sich somit auf ein Sandwichbauteil, das einen Wabenkern mit einer Vielzahl von Stegen aufweist, von dem zumindest eine Oberfläche, vorzugsweise jedoch Ober und Unterseite mit einer Deckschicht ausgestattet sind. Um eine große Gewichtsreduktion zu erreichen, kann der Wabenkern aus einem auf Zellulose basierten Material, das äußerst kostengünstig ist, gefertigt werden, wobei die Wabenstruktur dem Kern eine geringe Dichte bei gleichzeitig hoher spezifischer Steifigkeit verleiht. Die Deckschicht beziehungsweise die Deckschichten werden nun aus einem Faser verstärkten Halbzeug mit einer thermoplastischen Kunststoffmatrix gebildet, wodurch ebenfalls die Bauteilmaterialkosten gesenkt werden können, das jedoch zudem dem Sandwichbauteil eine ausreichende Festigkeit verleiht. Die Verwendung einer Thermoplastmatrix ermöglicht dabei vorteilhaft das Weglassen eines zusätzlichen Binde- oder Klebmittels, da der Thermoplast selbst bei Erwärmung geeignet ist, einen Verbund mit dem Wabenkern herzustellen. Dessen Stege werden dabei an den Anschlussstellen zu der aus dem Faser verstärkten Halbzeug gebildeten Deckschicht teilweise in die thermoplastische Kunststoffmatrix aufgenommen, so dass der Verbund des Sandwichbauteils mit guter Anbindung zwischen Wabenkern und Deckschicht geschaffen wird.

In einer Ausführungsform kann das Faser verstärkte Halbzeug mit der thermoplastischen Kunststoffmatrix ein Hybridfasergewebe sein, das Verstärkungsfasern und nicht-konsolidierte Thermoplastfasern umfasst. Die Verwendung des Hybridfasergewebes ermöglicht eine kostengünstige Herstellung des Sandwichbauteils, wobei eine Anordnung durch die Flexibilität des Hybridfasergewebes auf dem Wabenkern einfacher ist, da sich das Hybridfasergewebe besser an verschiedene Strukturen und/oder Formen anpassen kann, wodurch zudem vorteilhaft eine sehr gute Anbindung der aus dem Hybridfasergewebe gebildeten Deckschicht an dem Wabenkern erreicht wird.

Alternativ dazu kann das Faser verstärkte Halbzeug mit der thermoplastischen Kunststoffmatrix in einer weiteren Ausführungsform aus einer vorkonsolidierten Thermoplastplatte mit einem eingebetteten Verstärkungsfasergewebe bestehen, die auch Organoblech genannt wird. Die Vorteile bei der Verwendung eines Organoblechs liegen zum einen in einer besseren, weil glätteren Oberflächengüte der Deckschichten und zum anderen können die Sandwichbauteile mit Organoblechen als Deckschichten bessere mechanische Festigkeitswerte erreichen, was in der Vorkonsolidierung des Halbzeugs begründet liegt.

Neben den Faser-Geweben sind ebenso Gelege, Gestricke, dünne Vliese oder dergleichen Fasergebilde geeignet. Vliese sollten bevorzugt eine Dichte oberhalb 800 g/m³ aufweisen.

Als Material für die Verstärkungsfaser können Glasfasern, Carbonfasern, Aramidfasern und/oder Naturfasern gewählt werden, während geeignete thermoplastische Kunststoffe Polypropylen, Polycarbonat, Polyamid und Acrylnitril-Butadien-Styrol umfassen.

Ein dermaßen geschaffenes Sandwichbauteil kann zum Herstellen eines Kraftfahrzeugbauteils verwendet werden, wobei sowohl tragende Fahrzeugelemente wie Bodenplatten oder Rücksitzlehnen in Betracht kommen als auch Verkleidungselemente, darunter besonders die Innenverkleidungselemente. Als Beispiele seien ein Fahrzeughimmel, ein Sitzspannteil, ein Türmittelfeld und ein Türblatt genannt.

Eine Ausführungsform der Erfindung bezieht sich auf ein Verfahren zur Herstellung eines Sandwichbauteils, das eine ebene oder mit einem großen Radius gekrümmte, das heißt, eine leicht gekrümmte Form aufweist. Zur Herstellung des ebenen oder leicht gekrümmten Sandwichbauteils umfasst das Verfahren zunächst den Schritt des Bereitstellens des Zellulose haltigen Wabenkerns und des Faser verstärkten Halbzeugs mit einer thermoplastischen Kunststoffmatrix zur Ausbildung von zumindest einer, vorzugsweise jedoch zweier, den Wabenkern sandwichenden Deckschichten. Darauf folgt das Anordnen des Halbzeugs über und/oder unter dem Wabenkern, so dass eine Sandwichanordnung bereitgestellt wird. Zur Bildung der Deckschicht und der gegebenenfalls gekrümmten Form des Sandwichbauteils wird die Anordnung aus Wabenkern und Halbzeugen in einem Presswerkzeug positioniert, dessen Stempel und Matrize entsprechend dem Bauteilradius, falls vorgesehen, geformt sind, um das Sandwichbauteil mit der vorbestimmten Form bereitzustellen. Das Fertigen der vorbestimmten Form erfolgt dann in einem nächsten Schritt durch Ausüben eines definierten Drucks und dabei Verbinden der Sandwichanordnung aus Halbzeug und Wabenkern, indem das Presswerkzeug auf die Anordnung den Druck ausübt. Dabei schmilzt die thermoplastische Kunststoffmatrix des Halbzeugs, die mit einer Temperatur zwischen der Glasübergangstemperatur und der Schmelztemperatur des Kunststoffs beaufschlagt ist, zumindest teilweise in den Bereichen erhöhten Drucks auf und nimmt die Stege des Wabenkerns in den Anschlussbereichen an die Deckschicht teilweise auf, die aus dem faserverstärkten Halbzeug mit der thermoplastischen Kunststoffmatrix gebildet wird.

Hiernach kann das Bauteil aus dem Presswerkzeug entnommen und abgekühlt werden oder im offenen oder geschlossenen Werkzeug gekühlt werden.

Bevorzugt wird die Presse kontinuierlich auf derselben Temperatur gehalten. Das Einlegeteil inklusive des warmen und noch labilen Sandwichs wird aus der beheizten Presse entnommen und in ein kaltes Werkzeug eingelegt. Hier findet dann die Abkühlung des Sandwichs und die Verfestigung innerhalb kurzer Zeit statt. Des Weiteren, kann bei Bedarf der Anpressdruck erhöht werden, welches eine Veränderung der Oberflächengüte und des mechanischen Verbindung zwischen Kern und Deckschicht bewirkt

Das erfindungsgemäße Verfahren gestattet somit die Herstellung des Sandwichbauteils durch wenige Prozessschritte in einem einfachen Werkzeug, wobei die Bauteile in hohen Stückzahlen und kurzen Zykluszeiten gefertigt werden können.

Ein weiteres Verfahren bezieht sich auf die Herstellung eines stärker gekrümmten Sandwichbauteils, dessen Krümmung also einen kleineren Radius aufweist, der weitere Bearbeitungsschritte eines Wabenkerns aus Zellulosematerial erforderlich macht. Um ein Bauteil mit einer stärkeren Krümmung beziehungsweise mit kleineren Radien zu erhalten, wird zunächst der Wabenkern mit Wasser oder einem anderen geeigneten wässrigen Medium beziehungsweise einer geeigneten Flüssigkeit befeuchtet, etwa durch Besprühen oder Bedampfen, um eine bessere Verformbarkeit zu erzielen, so dass der umgeformte Wabenkern nach der Umformung auch dauerhaft bestehen bleibt. Neben Wasser sind Stärke-lösende Lösungen geeignet.

Dieses Verfahren ermöglicht die Herstellung von komplexen Bauteilen, die wenige oder gar keine planen Oberflächen mehr aufweisen und 3-dimansional strukturiert sind.

Bei der Herstellung von Papierhexagonalwaben oder ähnlichen Geometrien, können die Wabenkerne auch im Prozess expandiert werden. Hierfür werden die Vorkörper der Hexagonalwaben in der Expansionsanlage bei Zuführung von Wasser expandiert und erhalten ihre letztendliche Form. Anschließend werden die Hexagonalpapierwaben getrocknet. Die Befeuchtung, die zur Expansion notwendig ist, wird vorteilhaft beim Prozessschritt des Befeuchtens durchgeführt. Dies ist nur bei der Verwendung einer Expansionswabe möglich. Beispielsweise bei der Herstellung der Sinuswaben, findet keine Befeuchtung bei der Herstellung des Wabenkerns statt. Aus diesem Grund muss bei der Verwendung einer Sinuswabe eine gesonderte Befeuchtung erfolgen.

In einem nächsten Schritt wird der befeuchtete Wabenkern in einem Presswerkzeug positioniert, dessen Stempel und Matrize die vorbestimmte gekrümmte Form entsprechend dem Bauteilradius bereitstellen. Der befeuchtete Wabenkern wird dann unter Druckausübung in dem Presswerkzeug bei einer Temperatur in einem Bereich von 40 bis 200 °C umgeformt. Eine Trockenzeit des befeuchteten Wabenkerns hängt unmittelbar von dieser Temperatur ab. Durch die Befeuchtung des Wabenkerns sind mit diesem Verfahren auch komplexere Konturen ohne Beschädigungen in Form von Rissen des Wabenkerns darstellbar. Die umgeformte Wabenplatte ist in sich selbst durch die in der Papierart enthaltene Stärke und durch den zum Kleben des Wabenkerns verwendeten Leim stabil und formt sich nicht zurück.

Nachdem der Wabenkern dem Umformschritt unterzogen ist, wird das Presswerkzeug geöffnet, so dass das Halbzeug bzw. die Halbzeuge über und/oder unter dem umgeformten Wabenkern angeordnet werden können, so dass die Sandwichanordnung aus den Faser verstärkten Halbzeugen mit der thermoplastischen Kunststoffmatrix und dem Wabenkern geschaffen wird.

Die Bildung der Deckschichten und des Verbunds zwischen Halbzeugen und Wabenkern kann in dem gleichen Presswerkzeug erfolgen, in dem zuvor die Umformung des Wabenkerns durchgeführt wurde, wobei nun das Verbinden der Kunststoffmatrix mit dem Wabenkern beziehungsweise dessen Stegen analog der obigen Ausführung erfolgt. Die mit einer Temperatur zwischen der Glasübergangstemperatur und der Schmelztemperatur des Kunststoffs beaufschlagte Kunststoffmatrix beginnt zumindest teilweise unter dem Druck des Presswerkzeugs zu schmelzen und nimmt dadurch an den Anschlussstellen zu den Stegen diese teilweise auf und stellt dadurch den Verbund zwischen dem Faser verstärkten Halbzeug mit der thermoplastischen Kunststoffmatrix und dem Wabenkern bereit.

Die Temperatur wird dabei in Abhängigkeit des entsprechenden Thermoplasts so gewählt, dass der Kunststoff lokal an den Stellen erhöhten Drucks, welches zumindest die Anschlussstellen an die Stege sind, zu schmelzen beginnt, so dass die Stege in die aus der Faser verstärkten thermoplastischen Kunststoffmatrix eindringen können und so die Anbindung bereitgestellt wird.

Die dazu notwendige Temperaturbeaufschlagung der thermoplastischen Kunststoffmatrix, kann in beiden Verfahren einerseits durch eine in dem Presswerkzeug vorhandene Heizvorrichtung erfolgen, alternativ können die Halbzeuge aber auch vor dem Positionieren der Sandwichanordnung in dem Presswerkzeug in einer separaten Heizvorrichtung mit der erforderlichen Temperatur beaufschlagt werden. Vorteilhaft muss dann das Presswerkzeug nicht oder nur gering erwärmt werden, so dass die Zykluszeit zur Herstellung des Bauteils weiter verkürzt werden kann. Das Sandwichbauteil kann in einem kalten Werkzeug zudem besser endgeformt werden und die gebildete Deckschicht wird bei Verwendung eines kalten Werkzeugs härter. Die erwärmte Deckschicht härtet bei Verwendung eines Kalten Werkzeuges, insbesondere bei Temperaturen unterhalb ca. 80°C schneller aus. Ferner können Beschädigungen des Sandwichbauteils beim Entformen aus dem Presswerkzeug vermieden werden.

In einer weiteren Ausführungsform der beiden Verfahren kann während des Verbindens der Kunststoffmatrix an die Stege darin bestehen, dass das Presswerkzeug Weggesteuert eine gewisse Stauchung der Stege vornimmt. Dadurch wird eine größere Anbindungsfläche mit der Deckschicht geschaffen und gleichzeitig eine geringe Imprägnierung der Stege im Anschlussbereich mit dem thermoplastischen Kunststoff bewirkt, was die Anbindung zusätzlich verbessert.

Es erfolgt in aller Regel nur ein geringes Stauchen der Stege, insbesondere unterhalb 10% der Wabenplattendicke, um eine durch eine Wegsteuerung des Presswerkzeugs vorbestimmte Länge ohne maßgebliche Reduzierung der Bauteildicke.

Schließlich wird das Sandwichbauteil während der Herstellung mit einer Kantenversiegelung versehen, indem ein zur Bildung einer Deckschicht vorgesehenes Halbzeug Abmessungen aufweist, die eine Fläche des Wabenkerns und dessen Randflächen überdecken. Während des Druck Ausübens und Verbindens können dann die überstehenden Ränder des Halbzeugs in dem Presswerkzeug um den Rand des Wabenkerns umgebogen werden, so dass durch das lokale Aufschmelzen der Thermoplastmatrix und das Verbinden mit dem Wabenkernrand und/oder der zweiten Deckschicht die Versiegelung des Wabenkernrands bereitstellt.

Eine weitere Ausgestaltung der Erfindung sieht vor, bei der Herstellung im heißen Presswerkzeug auch eine Beschichtung mit einem Dekor auf der oberen und/oder unteren Lage anzubringen. Hierbei findet über das Anschmelzen des thermoplastischen Kunststoffs eine direkte Verbindung zwischen Dekor, Deckschicht, bzw. Thermoplast und dem Wabenkern in der beheizten Presse statt. Dies ist zum Beispiel bei der Verwendung eines Polyestervlieses als Dekormaterial sehr effektiv. Der zusätzliche Prozessschritt des eigentlichen Kaschierens entfällt. Das Dekormaterial muss dabei eine ausreichende Hitzebeständigkeit aufweisen.

Diese und weitere Vorteile werden durch die nachfolgende Beschreibung unter Bezug auf die begleitenden Figuren dargelegt.

Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1a: eine vergrößerte Abbildung eines Ausschnitts eines Organoblechs,
- Fig. 1b: eine vergrößerte Abbildung eines Ausschnitts eines Hybridfasergewebes,
- Fig. 2: eine vergrößerte Abbildung eines Ausschnitts einer Anbindung einer Wellstegwabe mittels PUR-Schaum an eine Deckschicht nach Stand der Technik,
- Fig. 3a: eine vergrößerte Abbildung eines Ausschnitts einer Anbindung einer Wellstegwabe mittels Aufschmelzen der thermoplastischen Matrix,
- Fig. 3b: eine vergrößerte Abbildung eines Ausschnitts einer Anhaftung eines Wellstegs an eine Deckschicht aus einem nicht vorkonsolidierten PP-Glasgewebe,
- Fig. 4: eine vergrößerte Abbildung eines Ausschnitts einer stumpfen Anhaftung eines Wellstegs an einer Deckschicht aus einem vorkonsolidierten PP-Glasgewebe,
- Fig. 5: zwei perspektivische Darstellungen eines aufgeschnittenen Sandwichbauteils,
- Fig. 6: eine schematische Darstellung der Verfahrensschritte nach einer Ausführungsform des Verfahrens zur Herstellung von ebenen oder leicht gekrümmten Bauteilen,
- Fig. 7: eine schematische Darstellung der Verfahrensschritte nach einer weiteren Ausführungsform des Verfahrens zur Herstellung eines Bauteils mit komplexen Konturen,
- Fig. 8: eine schematische Darstellung eines Presswerkzeugs zur Kantenversiegelung,
- Fig. 9: eine schematische Darstellung der Verfahrensschritte nach einer weiteren Ausführungsform des Verfahrens.

Das Sandwichbauteil bezieht sich vor allem auf Kraftfahrzeugbauteile, die entweder tragende Teile wie eine Bodenplatte oder eine Rücksitzlehne sein können, oder aber auch zur Herstellung von Verkleidungsteilen, insbesondere im Interieur eines Kraftfahrzeugs verwendet werden können.

Als Zellulose-Material für den Wabenkern kommen unter anderem Papier und Karton in Frage.

Die Bezeichnung "Wabe" soll die Struktur des Wabenkerns nicht beschränken, sondern eine aus Stegen aufgebaute Struktur mit geringer Dichte und hoher Druck- und Schubfestigkeit bezeichnen. Geeignete Wabenkernstrukturen umfassen hexagonale respektive Bienenwabenstrukturen, wellenförmige, kreisförmige, rauten- oder rechteckförmige Faltstrukturen oder auch unregelmäßig gestaltete "organisch" anmutende Strukturen.

Die Verwendung von Faser verstärkten Thermoplasten zur Bildung von Deckschichten eines Sandwichbauteils, das zur Herstellung einer Kraftfahrzeugkomponente vorgesehen ist, bietet im Vergleich zu duroplastischen Systemen mehrere Vorteile. Neben den niedrigeren Materialkosten und der einfacheren Lagerung stehen auch die Möglichkeit des thermischen Verbindens/Fügens mit anderen thermoplastischen Materialien sowie die kostengünstige Herstellung von Bauteilen in einem Presswerkzeug zur Verfügung. Dadurch lässt sich durch die Kombination aus einem Papierwabenkern und einem Faser verstärktem Thermoplast ein kostengünstiger Sandwichaufbau mit einem hohen Leichtbaupotenzial realisieren.

Bevorzugt werden die Deckschichten des Sandwichbauteils aus Faser verstärkten Halbzeugen mit thermoplastischer Kunststoffmatrix gebildet, wobei insbesondere zwei verschiedenartige thermoplastische Faser verstärkte Halbzeugarten als Deckschicht für den Papierwabenkern beschrieben werden. Zum einen werden Hybridgarngewebe aus einer Verstärkungsfaser (z.B. Glasfaser) und einer thermoplastischen Faser (z.B. Polypropylen), die nicht-konsolidiert vorliegen zur Bildung einer Deckschicht verwendet. Zum anderen können Organobleche, die vorkonsolidiert sind, erfindungsgemäß als Deckschicht Verwendung finden. Die in beiden Fällen vorhandene Thermoplastmatrix schmilzt bei der Formgebung partiell auf und verbindet sich mit dem Wabenkern.

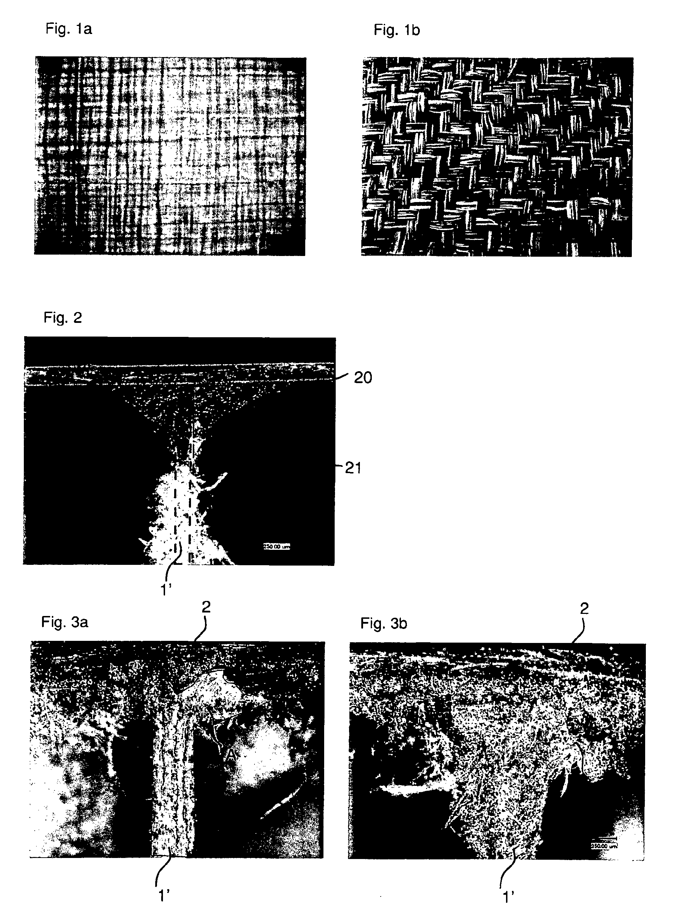

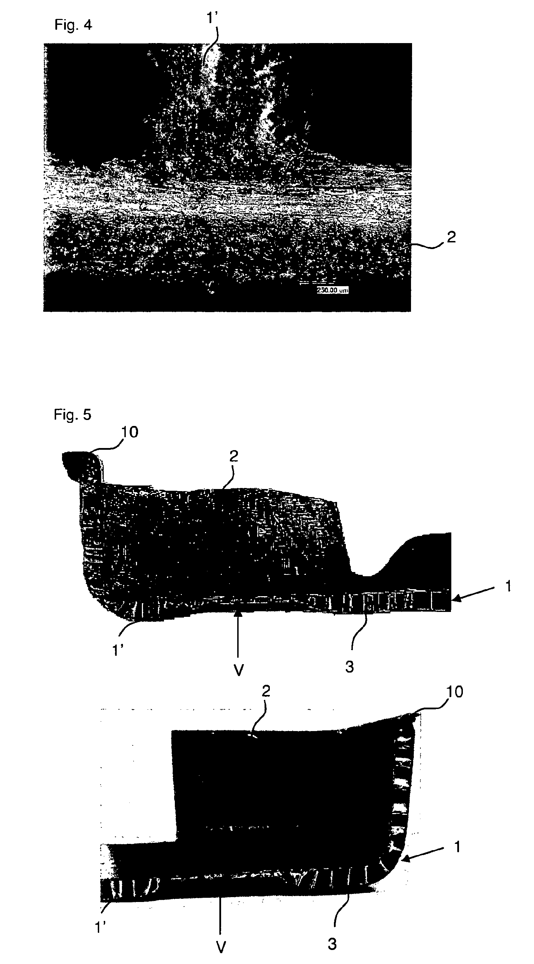

Nachfolgend werden die aus den verschiedenen Halbzeugen gebildeten Deckschichten und deren Haftung an einem Papierwabenkern näher beschrieben. Mikroskopische Aufnahmen der Anbindungsbereiche sind in den Fig. 3a, 3b und 4 dargestellt.

Eine Aufnahme eines vorkonsolidierten Faser verstärkten Thermoplasts, eines so genannten Organoblechs, ist in Fig. 1 a zu sehen. Ein nicht-konsolidierter Faser verstärkter Thermoplast, hier ein Hybridgarngewebe, ist in Fig. 1b abgebildet. So ist mit Fig. 1a und 1b ein Vergleich zwischen den beiden Halbzeugarten möglich, woraus deren Unterschiede bezüglich der Faser- und Webstruktur erkennbar werden.

Vorkonsolidierte Thermoplastplatten beziehungsweise Organobleche wie in Fig. 1 a besitzen den Vorteil, dass eine optimale Faser-Matrix Haftung durch das erneute Aufschmelzen und Verpressen des Polypropylens erreicht wird. Allerdings wird durch die Vorkonsolidierung eine verhältnismäßig biegesteife Platte erzeugt, mit der sich nachfolgende Umformvorgänge schlechter darstellen lassen als bei der Verwendung von Hybridgeweben, die - da nicht-konsolidiert - recht flexibel sind. Somit eignen sich Organobleche eher für ebene und leicht gekrümmte Sandwichbauteile.

Das nicht-konsolidierte Hybridgarngewebe aus Fig. 1b hingegen weist ein hohes Drapierungsvermögen auf, wodurch diese Halbzeuge besonders bei Strukturbauteilen mit großen Umformungen von Vorteil sind, wenn beispielsweise Bauteile mit komplexen Strukturen dargestellt werden sollen, wie etwa das Sandwichbauteil aus Fig. 5.

In beiden Fällen wird die Haftung zwischen der Papierwabe und dem Thermoplasten ausschließlich durch die Aufschmelzung des Thermoplasts erzeugt, auf zusätzliche Kleber, wie zum Beispiel Polyurethan-Schäume kann aus Gewichts-, Kosten- und Prozessgründen verzichtet werden.

So zeigt Fig. 2 die Anbindung einer Deckschicht 20 mittels PUR-Schaum 21 an den Wabensteg 1' nach dem Stand der Technik. Bei der Verwendung eines PUR-Schaums 21 bildet sich zwischen der Deckschicht 20 und dem Steg 1' des Papierwabenkerns eine Kehlnaht im Anschlussbereich A aus, wodurch sich die Klebefläche erheblich erhöht und eine gute Anhaftung der Deckschicht 20 entsteht. Für die Ausbildung einer Kehlnaht ist jedoch zusätzlicher Materialeintrag erforderlich.

Hingegen kann, wie in Fig. 3a,3b und 4 dargestellt, eine optimale Anbindung ohne zusätzlichen Materialauftrag erreicht werden, indem die Anbindung eines Wabenkernstegs 1' an die Deckschicht 2 im Anschlussbereich A sich im Schmelzbereich des Thermoplasts unter einer definierten Druckeinwirkung entwickelt. Der Steg 1' dringt dann abhängig davon, ob es sich bei dem verwendeten Halbzeug um ein Hybridgarngewebe oder ein Organoblech handelt mehr oder weniger stark in die Thermoplastmatrix ein.

So liegt bei der Verwendung einer thermoplastischen Matrix ein Ziel darin, den Steg der Papierwabe in die Matrix einzudrücken, um eine möglichst große Anbindungsfläche zu erzielen. Während in Fig. 2 die Ausbildung einer Kehlnaht durch einen PUR-Schaum zur Anbindung des Stegs 1' an die Deckschicht 20 gut zu erkennen ist, zeigt Fig. 3a eine typische Verklebung von Steg 1' und Deckschicht 2 im Anschlussbereich A, die durch Aufschmelzen der thermoplastischen Matrix zur Bildung der Deckschicht (hier ein Hybridgewebe) erzielt werden kann. Der Steg 1' ist dabei im Anschlussbereich A in die Deckschicht 2 eingedrückt, wodurch sich hier ebenso eine gute Anbindung wie durch die Kehlnat aus PUR-Schaum in Fig. 2 erkennen lässt.

Bei den nicht vorkonsolidierten Geweben, respektive den Hybridgeweben (in Fig. 3a und 3b) ergibt sich eine bessere Anhaftung der Wabenstege 1' an die Deckschichten 2, die Anbindung zwischen Organoblechen und Wabenkernstegen, dargestellt in Fig. 4, ist hingegen durch ein geringeres Eindringen der Stege 1' in die Deckschicht 2 etwas weniger ausgeprägt. Die bessere Anbindung bei Verwendung von Hybridgarngeweben liegt vor allem an deren Biegeweichheit und ihrer sehr gut Drapierbarkeit, so dass sich die einzelnen Hybridrovings bereits bei niedrigen Anpressdrücken um den Rand der Papierwaben legen. Beim anschließenden Aufschmelzen der Matrix wird so ein vergleichsweise großer Anschlussbereich A erzeugt.

Zur Schaffung der Anbindung der Wabenstege 1' an das starre vorkonsolidierte Organoblech (Fig. 4) muss im Presswerkzeug ein höherer Anpressdruck aufgebracht werden, um die Stege 1' im Anschlussbereich A etwas in die thermoplastische Matrix der Deckschicht 2 einzudrücken. Durch den höheren Anpressdruck können hier auch eventuell vorhandene Unregelmäßigkeiten über die Dicke der Wabe ausgeglichen werden. So wird das Sandwichbauteil unter Verwendung von vorkonsolidierten Platten als Deckschicht eine stumpfe "T-Verbindung" der Stege 1' an die Deckschicht 2. Durch diese relativ geringe Anhaftungsfläche werden Sandwichbauteile mit Organoblechen als Deckschichten in Bereichen eingesetzt, die nur geringer oder keiner Schubbeanspruchung des Kerns ausgesetzt sind.

Sowohl Organobleche als auch Hybridgarngewebe haben jeweils ihre Vorteile als Deckschicht für einen Papierwabenkern und können dementsprechend als Kraftfahrzeugbauteil eingesetzt werden. Organobleche zeichnen sich in Kombination mit einem Papierwabenkern durch eine bessere Oberflächengüte und durch bessere mechanische Eigenschaften wie Festigkeit infolge der Vorkonsolidierung aus, haben aber die schlechtere Anbindung an den Wabenkern.

Hingegen bietet die Verwendung von Hybridgarngeweben als Deckschichten in Kombination mit einem Papierwabenkern eine gute Anbindung zwischen Papierwabenkern und Hybridgewebe, deren Verwendung zudem preisgünstiger ist, da der Prozess der Konsolidierung direkt bei der Sandwichherstellung in dem Presswerkzeug stattfindet. Ferner lässt sich das Hybridgarngeweben besser als die Organobleche an dem Wabenkern anordnen beziehungsweise drapieren, insbesondere wenn dieser eine komplexe Kontur aufweist. Die Deckschichten aus Hybridgarngeweben erreichen jedoch nicht die Oberflächengüte und die spezifischen (mechanischen) Eigenschaften der aus Organoblech gebildeten Deckschichten.

Für beide Halbzeugarten können die gleichen Grundmaterialien für die thermoplastische Kunststoffmatrix und die Verstärkungsfaser verwendet werden, Verstärkungsfasern können beispielsweise Glasfasern, Kohlenstofffasern oder Aramidfasern oder Naturfasern sein. Als thermoplastischer Kunststoff kommen Polypropylen, Polycarbonat, Polyamid, Acrylnitril-Butadien-Styrol, aber auch Polyethylen, Polyethylenterephthalat, Polybutylenterephthalat, thermoplastische Polyurethane, Polyacetal, Polyphenylensulfid, Cycloolefincopolymere, thermotrope Polyester und Mischungen davon in Frage.

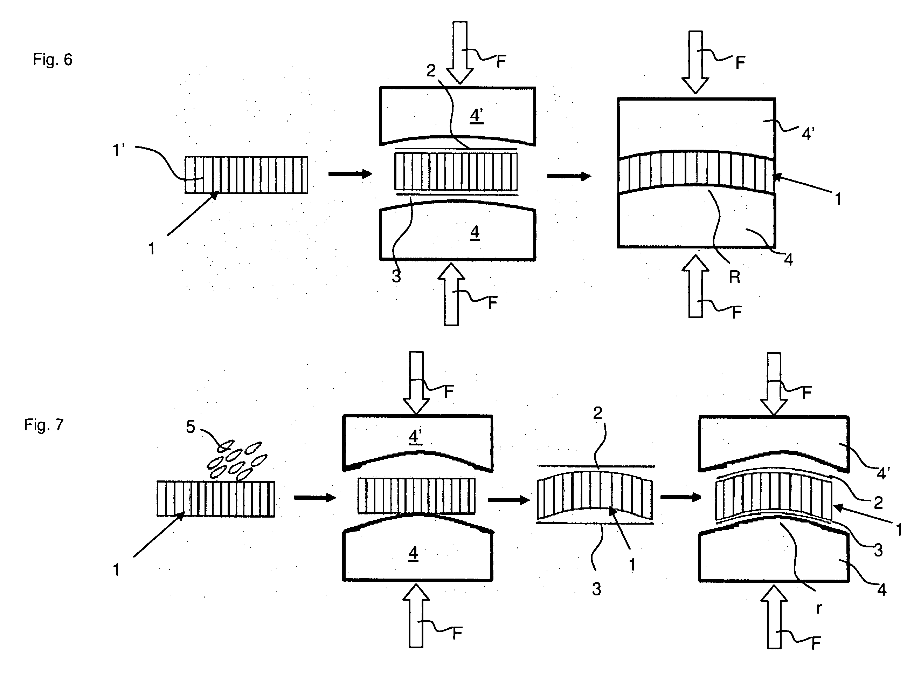

Nachfolgend werden geeignete Herstellungsverfahren für das Sandwichbauteil anhand der Fig. 6 bis 9 näher erläutert. Ein Herstellungsprozess für ebene oder leicht gekrümmte Sandwichbauteile aus Papierwabenkern und Faser verstärkten thermoplastischen Deckschichten, d. h. aus vorkonsolidierten Organoblechen oder Hybridfasergeweben) ist in Fig. 6 schematisch dargestellt. Für komplexere Formen eines Sandwichbauteils beziehungsweise stärkeren Krümmungen mit kleineren Radien r kann ein Herstellungsverfahren verwendet werden, das in Fig. 7 schematisch dargestellt ist.

Zur Herstellung eines leicht gekrümmten Bauteils mit einem großen Radius R wird, wie in Fig. 6 gezeigt, der Wabenkern nicht einzeln vorgeformt. Diese Fertigungsvariante dient auch zur Herstellung ebener Sandwichbauteile. Der für das Bauteil vorgesehene Wabenkern 1, der durch eine Vielzahl von Papierstegen 1' gebildet wird, wird zusammen mit den beiden Halbzeugzuschnitten 2,3 in dem Presswerkzeug aus Stempel 4 und Matrize 4' eingelegt, das die für das Bauteil vorgesehene Krümmung mit dem Radius R bereitstellt (für den nicht dargestellten Fall eines ebenen Bauteils weist das Presswerkzeug keine Krümmung auf). Indem das Presswerkzeug mit den Druckkräften F, symbolisiert durch die Blockpfeile, den zur Umformung nötigen Druck auf den zwischen den Halbzeugen 2,3 gesandwichten Wabenkern 1 ausübt, wird einerseits das Bauteil geformt und andererseits die Anbindung der thermoplastischen Kunststoffmatrix der Halbzeuge 2,3 an die Stege 1' des Wabenkerns 1 geschaffen, wobei hier in Fig. 6 die thermische Beaufschlagung der der thermoplastischen Kunststoffmatrix der Halbzeuge 2,3 im Presswerkzeug selbst erfolgt.

Dazu umfasst das Presswerkzeug eine geeignete Heizvorrichtung, so dass die thermoplastische Kunststoffmatrix der Halbzeuge 2,3 mit einer von der Art des Kunststoffs abhängigen Temperatur beaufschlagt werden kann, die zwischen der Glasübergangstemperatur und der Schmelztemperatur des ausgewählten jeweiligen Kunststoffs liegt. Die Verwendung eines zusätzlichen Bindemittels ist nicht notwendig. Das Presswerkzeug kann Weg- oder Kraft gesteuert werden, wobei die Weg gesteuerte Variante bevorzugt wird, mit der eine geringe Stauchung des Wabenkerns, respektive der Stege im Anschlussbereich an die Deckschicht, und damit eine verbesserte Anbindung erreicht werden kann.

Mit einer solchen Stauchung des Steges wird ein größerer Anschlussbereich geschaffen, und somit die Anbindung respektive Adhäsion des Wabenkerns an die Deckschichten verbessert. Zusätzlich zur größeren Anbindungsfläche im Falle der Stauchung wird noch eine leichte Imprägnierung der Stege des Wabenkerns im Anbindungsbereich bewirkt, indem thermoplastisches Kunststoffmaterial in das Papiermaterial eindringt. Die Anbindungsqualität kann dabei über die gewählte Temperatur und die Schließzeit der Presse beeinflusst werden.

In Fig. 7 ist die Prozesskette zur Herstellung eines Kraftfahrzeugbauteils mit kleineren Radien r beziehungsweise größerer Krümmung verdeutlicht, die zwei zusätzliche Prozessschritte erforderlich macht.

Zunächst wird der Wabenkern 1 mit Wasser 5 durch Bedampfen oder Besprühen befeuchtet, so dass er sich ohne Beschädigung auch zu komplexeren Konturen, wie etwa dem kleineren Radius r, umformen lässt. Durch die Befeuchtung wird eine bessere Verformbarkeit erzielt und einer späteren Rückverformung des fertigen Bauteils vorgebeugt. Zudem wird ein Reißen des Papiers beim Umformen verhindert. Die Stabilität des Papierkerns 1 wird dabei nach dem Trocknen nicht beeinflusst. Der befeuchtete Wabenkern 1 wird in ein Presswerkzeug mit Stempel 4 und Matrize 4' eingelegt und dort mittels der Druckkraft F, und zwar bei einer Temperatur in einem Bereich von 40 bis 200 °C, umgeformt. Dies bewirkt gleichzeitig die Trocknung des Wabenkerns, wobei eine Trocknungszeit vom gewählten Temperaturniveau abhängt. Zur besseren Trocknung können in dem Presswerk Öffnungen vorgesehen sein, die Wasser beziehungsweise Wasserdampf austreten lassen.

Nach Öffnen des Presswerkzeugs kann der nun umgeformte Wabenkern 1 zwischen den Halbzeugen 2,3 angeordnet werden, dies kann innerhalb oder außerhalb des Presswerkzeugs geschehen. Ein Verbinden der thermoplastischen Matrix der Halbzeuge 2,3 mit den Stegen 1' des Wabenkerns 1 erfolgt in einem zweiten Pressvorgang, der vorteilhaft in dem gleichen Presswerkzeug 4,4' ausgeführt werden kann, indem wie zuvor ausgeführt, bei der Temperatur, die zwischen der Glasübergangs- und der Schmelztemperatur der thermoplastischen Kunststoffmatrix liegt, der Verbund der gebildeten Deckschichten 2,3 mit den Stegen 1' des Wabenkern 1 durch ein Eindringen der Stege 1' in die thermoplastische Kunststoffmatrix der Deckschichten 2,3 hergestellt wird. Auch hier kann eine geringe Stauchung des Wabenkerns respektive der Stege zur Verbesserung der Anbindung durchgeführt werden.

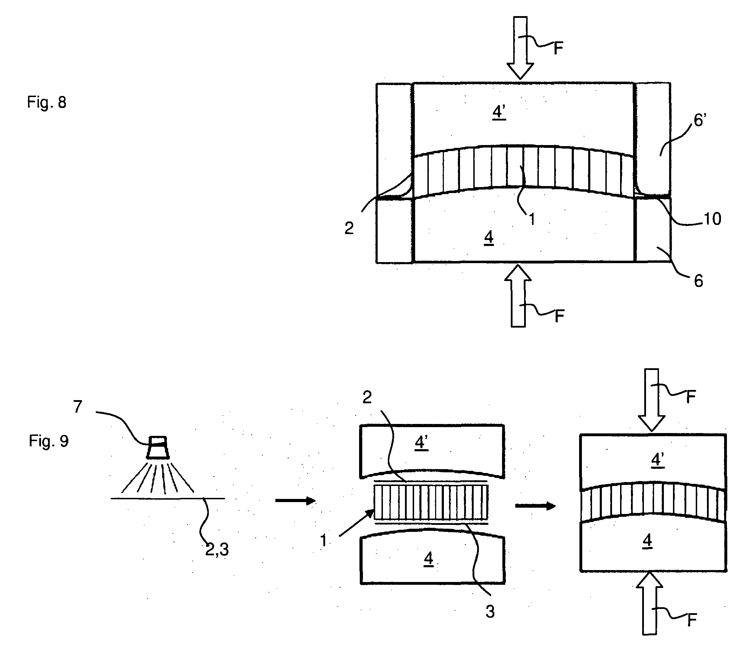

In Fig. 8 ist dargestellt, wie sich durch eine einfache konstruktive Modifikation des Presswerkzeugs, das Stempel 4 und Matrize 4' umfasst, ein Verschluss der Kanten 10 des Wabenkerns 1 durch ein Umkanten des Deckschicht bildenden Halbzeugs 2 bereitstellen lässt. Dabei weist das Presswerkzeug zusätzlich an der Matrize 4' eine Vorrichtung 6' auf, die die oben angeordnete Folie 2, die dazu eine größere Fläche als der Wabenkern 1 aufweist, um die Kante 10 anlegt und dort einen Verbund des umgekanteten Halbzeugs 2 entweder mit dem unteren Halbzeug 3 und/oder dem Wabenkernrand 10 bewirkt, so dass der Papierwabenkern des Kraftfahrzeugbauteils vor Wasser, Schmutz und anderen Fremdpartikeln geschützt ist. Der Umkantvorrichtung 6' steht ein entsprechender Anschlag 6 auf der Seite des Stempels 4 gegenüber, so dass in diesem Presswerkzeug der Pressweg durch den Anschlag 6 begrenzt ist.

In Fig. 5 ist an dem Rand 10 ein solcher Kantenverschluss zu sehen, an dem beide Deckschichten 2,3 miteinander verschmolzen sind. Die hier ausschnittsweise dargestellten Sandwichbauteile weisen Deckschichten 2,3 auf, die aus Hybridgarngewebe gebildet wurden, das sich an die komplexe Formung des Wabenkerns 1 besser anlegen lässt. Ferner ist hier ein Bereich V mit einer Querschnittsverjüngung zu sehen, in dem die Stege 1' des Wabenkerns 1 gestaucht sind, um der vorgegebenen Bauteilform zu entsprechen. Dennoch weisen die Bauteile auch in diesem Bereich V eine ausreichende Festigkeit auf, die sich aus den konsolidierten Deckschichten 2,3 sowie der starken Anbindung im Verjüngungsbereich V mit der Imprägnierung der gestauchten Stege ergibt.

In Fig. 9 ist eine Variation der Prozessabfolge dargestellt, in der die Halbzeuge 2,3 nicht in dem Presswerkzeug 4,4' mit der erforderlichen Temperatur beaufschlagt werden, sondern vor der Anordnung zum Sandwich mit dem Wabenkern 1 in einer externen Heizvorrichtung, beispielsweise mit Hilfe eines Ofens oder eines Strahlers, erhitzt werden. Hierdurch muss das Presswerkzeug 4,4' selbst nicht erhitzt werden oder gegebenenfalls nur gering erwärmt werden - dies kann erforderlich sein, damit es zu keiner abrupten Abkühlung der thermoplastischen Deckschicht 2,3 kommt - wobei diese Verfahrensvariante eine Verkürzung der Herstellungszykluszeit ermöglicht. Darüber hinaus ist das Entformen aus einem kalten Werkzeug leichter durchführbar, die gebildete Deckschicht wird bei der Verwendung eines kalten Werkzeuges härter und zudem kann eine Verletzung oder Beschädigung des Sandwichbauteils beim Endformen besser vermieden werden. Diese Variante kann sowohl für kleine als auch große Radien verwendet werden.

Vorteilhaft stellt die vorliegende Erfindung ein Sandwichbauteil aus preisgünstigen Materialien bereit, dessen Herstellung mit einem ebenfalls kostenreduzierten Verfahren möglich ist. So sind kurze Prozesszyklen und damit eine wirtschaftlich günstige Fertigung möglich. Das Verfahren für die Herstellung des Sandwichbauteils erfordert nur wenige Prozessschritte, und die Investitionskosten für Maschinen und Werkzeuge sind aufgrund einfacher Geometrie und dem nur geringen erforderlichen Druck, der wenig Abnutzung mit sich bringt, relativ niedrig.

Mit den beschriebenen Verfahren können Verkleidungsteile eines Fahrzeuginterieurs, wie zum Beispiel Dachhimmel, Sitzspannteile, Türmittelfelder oder.Türblätter mit einfachen Geometrien hergestellt werden. Ebenso ist es möglich, tragende Strukturen, zum Beispiel eine Fondsitzlehne, mit den beschriebenen Materialkombinationen und den Verfahrensschritten herzustellen. Abhängig von dem vorgesehenen Verwendungszweck kann das Flächengewicht der Deckschicht und der Wabenkern an die mechanischen Anforderungen angepasst werden.

Ferner können die aus den Sandwichbauteilen gefertigten Kraftfahrzeugbauteile, vor allem die für den Innenraum vorgesehenen Verkleidungsteile, beispielsweise mit Leder, einem natürlichen Textil oder einem Kunstfasertextil, etwa einem Mikrofasertextil, kaschiert werden.

## Patentansprüche

1. Verfahren zur Herstellung eines Sandwichbauteils mit einer ebenen oder mit einer um einen Radius (R) gekrümmten Form,
umfassend einen Wabenkern (1) mit einer Vielzahl von Stegen (1') und zumindest zwei Deckschichten (2,3), die über und unter dem Wabenkern angeordnet sind, wobei der Wabenkern (1) aus einem auf Zellulose basierten Material besteht, und wobei die Deckschichten (2,3) aus einem Faser verstärkten Halbzeug mit einer thermoplastischen Kunststoffmatrix gebildet wird, und wobei die Stege (1') des Wabenkerns (1) an Anschlussstellen (A) zu den Deckschichten (2,3) wenigstens teilweise in die thermoplastische Kunststoffmatrix der Deckschicht (2,3) aufgenommen sind, so dass ein Verbund des Sandwichbauteils bereitgestellt wird, umfassend die Schritte:
- Bereitstellen des Wabenkerns (1) und zumindest zwei Faser verstärkte Halbzeuge mit einer thermoplastischen Kunststoffmatrix,
- Anordnen der Halbzeuge über und unter dem Wabenkern (1),
- Positionieren der Anordnung in einem Presswerkzeug mit einem Stempel (4) und einer Matrize (4'), die die vorbestimmte ebene oder gekrümmte Form des Sandwichbauteils bereitstellen,
- Druck Ausüben und Verbinden der Anordnung aus Halbzeugen und Wabenkern (1), wobei die thermoplastische Kunststoffmatrix mit einer Temperatur beaufschlagt wird, die zwischen einer Glasübergangstemperatur und einer Schmelztemperatur des Kunststoffs liegt,
wobei das Verbinden durch ein zumindest teilweises Aufschmelzen der thermoplastischen Kunststoffmatrix und ein teilweises Aufnehmen der Stege (1') des Wabenkerns (1) in die thermoplastische Kunststoffmatrix an Anschlussstellen (A) der Stege (1') zu den Deckschichten (2,3) bereitgestellt wird, die aus dem Faser verstärkten Halbzeug mit der thermoplastischen Kunststoffmatrix gebildet wird,
**dadurch gekennzeichnet, dass**
das Sandwichbauteil während der Herstellung mit einer Kantenversiegelung versehen wird, indem ein zur Bildung einer Deckschicht vorgesehenes Halbzeug Abmessungen aufweist, die eine Fläche des Wabenkerns und dessen Randflächen überdecken und während des Druck Ausübens und Verbindens dann überstehende Ränder des Halbzeugs in dem Presswerkzeug um den Rand des Wabenkerns umgebogen werden, so dass durch das lokale Aufschmelzen der Thermoplastmatrix und das Verbinden mit dem Wabenkernrand und/oder der zweiten Deckschicht die Versiegelung des Wabenkerns bereitgestellt wird.

2. Verfahren zur Herstellung eines Sandwichbauteils mit einer um einen Radius (r) gekrümmten Form, umfassend einen Wabenkern (1) mit einer Vielzahl von Stegen (1') und zumindest zwei Deckschichten (2,3), die über und unter dem Wabenkern angeordnet sind, wobei der Wabenkern (1) aus einem auf Zellulose basierten Material besteht, und wobei die Deckschichten (2,3) aus einem Faser verstärkten Halbzeug mit einer thermoplastischen Kunststoffmatrix gebildet wird, und wobei die Stege (1') des Wabenkerns (1) an Anschlussstellen (A) zu den Deckschichten (2,3) wenigstens teilweise in die thermoplastische Kunststoffmatrix der Deckschicht (2,3) aufgenommen sind, so dass ein Verbund des Sandwichbauteils bereitgestellt wird, umfassend die Schritte:
- Befeuchten des Wabenkerns (1) mit Wasser (5) oder einer Stärke-lösenden Lösung durch Besprühen oder Bedampfen,
- Anordnen des befeuchteten Wabenkerns (1) in einem Presswerkzeug mit einem Stempel (4) und einer Matrize (4'), die die vorbestimmte gekrümmte Form des Sandwichbauteils bereitstellen,
- Umformen des befeuchteten Wabenkerns (1) in dem Presswerkzeug durch Druckausübung und bei einer Temperatur in einem Bereich von 40 °C bis 200 °C,
- Bereitstellen von zumindest zwei Faser verstärkten Halbzeugen mit einer thermoplastischen Kunststoffmatrix und Anordnen der Halbzeuge über und unter dem Wabenkern (1),
- Positionieren der Anordnung in dem Presswerkzeug,
- Druck Ausüben und Verbinden der Anordnung aus Halbzeugs und Wabenkern (1), wobei die thermoplastische Kunststoffmatrix mit einer Temperatur beaufschlagt wird, die zwischen einer Glasübergangstemperatur und einer Schmelztemperatur des Kunststoffs liegt,
wobei das Verbinden durch ein zumindest teilweises Aufschmelzen der thermoplastischen Kunststoffmatrix und ein teilweises Aufnehmen der Stege (1') des Wabenkerns (1) in die thermoplastische Kunststoffmatrix an Anschlussstellen (A) der Stege (1') zu der Deckschicht (2,3) bereitgestellt wird, die aus dem Faser verstärkten Halbzeug mit der thermoplastischen Kunststoffmatrix gebildet wird,
**dadurch gekennzeichnet, dass**
das Sandwichbauteil während der Herstellung mit einer Kantenversiegelung versehen wird, indem ein zur Bildung einer Deckschicht vorgesehenes Halbzeug Abmessungen aufweist, die eine Fläche des Wabenkerns und dessen Randflächen überdecken und während des Druck Ausübens und Verbindens dann überstehende Ränder des Halbzeugs in dem Presswerkzeug um den Rand des Wabenkerns umgebogen werden, so dass durch das lokale Aufschmelzen der Thermoplastmatrix und das Verbinden mit dem Wabenkernrand und/oder der zweiten Deckschicht die Versiegelung des Wabenkerns bereitgestellt wird.

3. Verfahren nach Anspruch 1 oder 2,
wobei
die Temperaturbeaufschlagung der thermoplastischen Kunststoffmatrix (2,3)
- durch eine Heizvorrichtung, die in dem Presswerkzeug umfasst ist, oder
- durch eine separate Heizvorrichtung vor dem Positionieren der Anordnung in dem Presswerkzeug durchgeführt wird.

4. Verfahren nach zumindest einem der Ansprüche 1 bis 3,
umfassend die Schritte
während des Verbindens der thermoplastischen Kunststoffmatrix (2,3) an die Stege (1')
- Stauchen der Stege (1') um einem durch eine Wegsteuerung des Presswerkzeugs vorbestimmte Länge.

## Claims

1. Method for the production of a sandwich component having a flat shape or a shape curved around a radius (R),
comprising a honeycomb core (1) with a plurality of webs (1') and at least two cover layers (2, 3) which are placed above and below the honeycomb core, wherein the honeycomb core (1) consists of a cellulose-based material, and wherein the cover layers (2, 3) are formed from a fibre-reinforced semi-finished product with a thermoplastic plastic matrix, and wherein the webs (1') of the honeycomb core (1) are, at connecting points (A) to the cover layers (2, 3), at least partially accommodated in the thermoplastic plastic matrix of the cover layer (2, 3), so that a composite of the sandwich component is provided, comprising the steps of:
- the provision of the honeycomb core (1) and at least two fibre-reinforced semi-finished products with a thermoplastic plastic matrix,
- the arrangement of the semi-finished products above and below the honeycomb core (1),
- the positioning of the assembly in a pressing tool with a male die (4) and a female die (4') which provide the predetermined flat or curved shape of the sandwich component,
- the application of pressure and the joining of the assembly of semi-finished product and honeycomb core (1), wherein the thermoplastic plastic matrix is subjected to a temperature between a glass transition temperature and a melting temperature of the plastic,
wherein the connection is provided by an at least partial melting of the thermoplastic plastic matrix and a partial reception of the webs (1') of the honeycomb core (1) in the thermoplastic plastic matrix at connecting points (A) between the webs (1') and the cover layers (2, 3) made of the fibre-reinforced semi-finished product with the thermoplastic plastic matrix, **characterised in that**
in the production process, the sandwich component is provided with an edge seal by giving a semi-finished product designed for the formation of a cover layer dimensions which cover a surface of the honeycomb core and its edge surfaces and by bending projecting edges of the semi-finished product around the edge of the honeycomb core in the pressing tool during the pressing and joining process, so that the sealing of the honeycomb core is accomplished by the local melting of the thermoplastic matrix and the joining to the honeycomb core and/or to the second cover layer.

2. Method for the production of a sandwich component having a shape curved around a radius (r),
comprising a honeycomb core (1) with a plurality of webs (1') and at least two cover layers (2, 3) which are placed above and below the honeycomb core, wherein the honeycomb core (1) consists of a cellulose-based material, and wherein the cover layers (2, 3) are formed from a fibre-reinforced semi-finished product with a thermoplastic plastic matrix, and wherein the webs (1') of the honeycomb core (1) are, at connecting points (A) to the cover layers (2, 3), at least partially accommodated in the thermoplastic plastic matrix of the cover layer (2, 3), so that a composite of the sandwich component is provided, comprising the steps of:
- the wetting of the honeycomb core (1) with water (5) or with a starch-dissolving solution by spraying or the application of steam,
- the positioning of the wetted honeycomb core (1) in a pressing tool with a male die (4) and a female die (4') which provide the predetermined curved shape of the sandwich component,
- the forming of the wetted honeycomb core (1) in the pressing tool by applying pressure at a temperature in a range of 40°C to 200°C,
- the provision of at least two fibre-reinforced semi-finished products with a thermoplastic plastic matrix and the arrangement of the semi-finished products above and below the honeycomb core (1),
- the positioning of the assembly in the pressing tool,
- the application of pressure and the joining of the assembly of semi-finished product and honeycomb core (1), wherein the thermoplastic plastic matrix is subjected to a temperature between a glass transition temperature and a melting temperature of the plastic,
wherein the connection is provided by an at least partial melting of the thermoplastic plastic matrix and a partial reception of the webs (1') of the honeycomb core (1) in the thermoplastic plastic matrix at connecting points (A) between the webs (1') and the cover layers (2, 3) made of the fibre-reinforced semi-finished product with the thermoplastic plastic matrix,
**characterised in that**
in the production process, the sandwich component is provided with an edge seal by giving a semi-finished product designed for the formation of a cover layer dimensions which cover a surface of the honeycomb core and its edge surfaces and by bending projecting edges of the semi-finished product around the edge of the honeycomb core in the pressing tool during the pressing and joining process, so that the sealing of the honeycomb core is accomplished by the local melting of the thermoplastic matrix and the joining to the honeycomb core and/or to the second cover layer.

3. Method according to claim 1 or 2,
wherein
the temperature is applied to the thermoplastic plastic matrix (2, 3)
- by a heating device included in the pressing tool, or
- by a separate heating device before the assembly is positioned in the pressing tool.

4. Method according to one or more of claims 1 to 3,
comprising the steps of:
- while the thermoplastic plastic matrix (2, 3) is being joined to the webs (1'),
- the compression of the webs (1') by a length predetermined by a tool-path control of the pressing tool.

## Revendications

1. Procédé de fabrication d'un élément en sandwich ayant une forme plane ou ayant une forme courbée autour d'un rayon (R), comprenant un noyau alvéolaire (1) ayant une pluralité d'âmes (1) et au moins deux couches de revêtement (2, 3) qui sont disposées sur et sous le noyau alvéolaire, le noyau alvéolaire (1) étant composé d'un matériau à base de cellulose, et les couches de revêtement (2, 3) étant formés d'un demi-produit renforcé de fibres ayant une matrice thermoplastique, et les âmes (1') du noyau alvéolaire (1) sont logées sur des points de raccordement (A) aux couches de revêtement (2, 3) au moins en partie dans la matrice thermoplastique de la couche de revêtement (2, 3), de manière qu'une liaison de composant en sandwich soit préparée, comprenant les étapes consistant à :
- préparer le noyau alvéolaire (1) et au moins deux demi-produits renforcés par des fibres avec une matrice thermoplastique,
- disposer les demi-produits sur et sous le noyau alvéolaire (1),
- positionner l'agencement dans un outil de pression ayant un poinçon (4) et une matrice (4') qui préparent la forme plane ou courbée du composant en sandwich,
- exercer une pression et relier l'agencement comprenant les demi-produits et le noyau alvéolaire (1), la matrice thermoplastique étant soumise à une température comprise entre une température de transition vitreuse et une température de fusion du plastique, la liaison étant préparée par une fusion au moins partielle de la matrice thermoplastique et par réception partielle des âmes (1') du noyau alvéolaire (1) dans la matrice thermoplastique à des points de raccordement (A) des âmes (1') aux couches de revêtement (2, 3) qui est formé à partir d'un demi-produit renforcé de fibres avec la matrice thermoplastique **caractérisé en ce que** l'élément en sandwich pendant la fabrication est pourvu d'une vitrification des bords, pendant qu'un demi-produit destiné à former une couche de revêtement présentent des dimensions qui recouvrent une surface du noyau alvéolaire et ses surfaces de bord, et pendant l'exercice de pression et la liaison des bords faisant saillie du demi-produit sont pliés dans l'outil de pression autour du bord du noyau alvéolaire, de manière que la fusion locale de la matrice thermoplastique et la liaison avec le bord du noyau alvéolaire et/ou de la seconde couche de recouvrement permettent le scellement du noyau alvéolaire.

2. Procédé de fabrication d'un élément en sandwich ayant une forme plane ou ayant une forme courbée autour d'un rayon (R), comprenant un noyau alvéolaire (1) ayant une pluralité d'âmes (1') et au moins deux couches de revêtement (2, 3) qui sont disposées sur et sous le noyau alvéolaire, le noyau alvéolaire (1) étant composé d'un matériau à base de cellulose, et les couches de revêtement (2, 3) étant formées à partir d'un demi-produit (1) renforcé de fibres avec une matrice thermoplastique, et les âmes (1) du noyau alvéolaire (1) sont logées à des points de raccordement (A) aux couches de revêtement (2, 3) au moins en partie dans la matrice thermoplastique de la couche de revêtement (2, 3) de manière qu'une liaison de l'élément en sandwich puisse être préparée, comprenant les étapes consistant à :
- humidifier le noyau alvéolaire (1) avec de l'eau (5) ou avec une solution dissolvant l'amidon par pulvérisation ou par vaporisation,
- disposer le noyau alvéolaire (1) humidifié dans un outil de pression ayant un poinçon (4) et une matrice (4') qui préparent la forme courbée prédéfinie de l'élément en sandwich,
- modifier par pression la forme du noyau alvéolaire (1) humidifié dans un outil de pression et à une température comprise dans une plage entre 40 °C bis 200 °C,
- préparer au moins deux demi-produits renforcés par des fibres avec une matrice thermoplastique et disposer les demi-produits sur et sous le noyau alvéolaire (1),
- positionner l'agencement dans l'outil de pression,
- exercer une pression et relier l'agencement comprenant les demi-produits et le noyau alvéolaire (1), la matrice thermoplastique étant soumise à une température comprise entre une température de transition vitreuse et une température de fusion du plastique, la liaison étant préparée par une fusion au moins partielle de la matrice thermoplastique et par réception partielle des âmes (1') du noyau alvéolaire (1) dans la matrice thermoplastique à des points de raccordement (A) des âmes (1') à la couche de revêtement (2, 3) qui est composée d'un demi-produit renforcé de fibres avec une matrice thermoplastique, **caractérisé en ce que** l'élément en sandwich est doté pendant la fabrication d'une vitrification de bord pendant qu'un demi-produit destiné à former une couche de revêtement présente des dimensions qui recouvrent une surface du noyau alvéolaire et ses surfaces de bord et pendant l'exercice de la pression et la liaison des bords faisant saillie du demi-produit sont pliés dans l'outil de pression autour du bord du noyau alvéolaire, de manière que la fusion locale de la matrice thermoplastique et la liaison avec le bord de noyau alvéolaire et/ou la seconde couche de revêtement permettent le scellement du noyau alvéolaire.

3. Procédé selon la revendication 1 ou la revendication 2, la matrice thermoplastique (2, 3) est soumise à une température
- à l'aide d'un dispositif de chauffage qui est compris dans l'outil de pression, ou
- à l'aide d'un dispositif de chauffage séparé avant le positionnement de l'agencement dans l'outil de pression.

4. Procédé selon au moins l'une quelconque des revendications 1 à 3, comprenant les étapes consistant à pendant la liaison de la matrice thermoplastique (2, 3) sur les âmes (1'), comprimer les âmes (1') à une longueur prédéfinie par une commande de trajectoire de l'outil de pression.
